# FASCICULE DE BREVET EUROPEEN

(11) **EP 2 893 221 B1**
(45) Date de publication et mention de la délivrance du brevet: **14.08.2019**
(21) Numéro de dépôt: 13766596.4
(22) Date de dépôt: 29.08.2013
(51) Int. Cl.: F16H 57/04, F16H 57/08, F02C 7/36

(54) **RÉDUCTEUR À TRAIN ÉPICYCLOÏDAL, NOTAMMENT POUR TURBOMACHINE**
DREHZAHLREDUZIERENDE EINHEIT MIT EINEM PLANETENGETRIEBE, INSBESONDERE FÜR EINEN TURBINENMOTOR
SPEED-REDUCING UNIT HAVING AN EPICYCLIC GEAR TRAIN, IN PARTICULAR FOR A TURBINE ENGINE

(30) Priorité: 04.09.2012 FR 1258230
(43) Date de publication de la demande: 15.07.2015
(73) Titulaire: Safran Transmission Systems, 92700 Colombes (FR)
(72) Inventeur: FERAUD, Benjamin, F-92500 Rueil-Malmaison (FR)
(74) Mandataire: Robert, Mathias
(86) Numéro de dépôt international: PCT/FR2013/051992
(87) Numéro de publication internationale: WO 2014/037652

(56) Documents cités:
- US-A- 3 469 656
- US-A- 4 271 928

## Description

La présente invention concerne un réducteur à train épicycloïdal, notamment pour turbomachine.

Un train épicycloïdal comporte classiquement un planétaire interne et un planétaire externe coaxiaux, le planétaire interne étant mobile en rotation autour de son axe, le planétaire externe étant fixe, au moins un satellite monté de façon mobile en rotation sur un porte-satellite et engrenant à la fois avec le planétaire interne et avec le planétaire externe, le porte-satellite étant pivotant autour de l'axe du planétaire interne et du planétaire externe. Généralement, l'entrée est formée par le planétaire interne, également appelé soleil, et la sortie est formée par le porte-satellite. Le planétaire externe est également appelé couronne.

Dans une turbomachine, des trains épicycloïdaux sont notamment utilisés en tant que réducteur de vitesse pour réduire la vitesse de rotation du rotor de la soufflante, indépendamment de la vitesse de rotation de la turbine.

Le document EP 1 703 174 décrit un tel réducteur à train épicycloïdal, dans lequel les roues dentées formant les satellites sont montées sur des pivots du porte-satellite par l'intermédiaire de paliers lisses. En d'autres termes, le porte-satellites comporte des pivots cylindriques engagés dans des trous cylindriques des satellites. Le réducteur comporte en outre un canal d'amenée d'huile débouchant au niveau de l'interface entre lesdites surfaces cylindriques. En fonctionnement, une couche d'huile doit être présente au niveau de l'interface, afin d'éviter le grippage.

Les paliers lisses sont globalement moins lourds, moins encombrants et plus fiables que des paliers utilisant des éléments roulants. Ils ont une durée de vie quasiment infinie, pour autant qu'ils soient constamment alimentés en huile et que cette huile ne comporte pas de particules abrasives.

En cas de panne dans le circuit d'amenée d'huile, par exemple en cas de panne d'une pompe, il est nécessaire de maintenir l'alimentation en huile du palier lisse pendant une période suffisante pour démarrer une pompe auxiliaire ou arrêter la turbomachine, par exemple. Cette période est par exemple de plusieurs dizaines de secondes.

Pour cela, le document EP 1 703 174 prévoit de former des accumulateurs dans le porte-satellites, chaque accumulateur étant apte à fournir de l'huile à un palier lisse en cas de panne, pendant une période déterminée.

La structure de ces accumulateurs et leurs emplacements rendent difficile la réalisation du porte-satellites et augmentent les dimensions et la masse de ce dernier.

Le document US3469656 divulgue un réducteur à train épicycloïdal qui, selon l'opinion de la division d'examen de l'Office européen des brevets, comporte toutes les caractéristiques du préambule de la revendication 1.

L'invention a notamment pour but d'apporter une solution simple, efficace et économique à ce problème.

A cet effet, elle propose un réducteur à train épicycloïdal, notamment pour turbomachine, comportant un planétaire interne et un planétaire externe coaxiaux, le planétaire interne étant mobile en rotation autour de son axe, le planétaire externe étant fixe, au moins un satellite monté de façon mobile en rotation sur un porte-satellite et engrenant à la fois avec le planétaire interne et avec le planétaire externe, le porte-satellite étant pivotant autour de l'axe du planétaire interne et du planétaire externe, le satellite comportant une surface interne cylindrique montée pivotante autour d'une surface cylindrique du porte-satellite, le réducteur comportant en outre des moyens d'amenée d'huile au niveau de l'interface entre lesdites surfaces cylindriques, caractérisé en ce que les moyens d'amenée d'huile comportent une chambre ménagée dans le porte-satellite, destinée à former un volume tampon d'huile, et comportant une zone dite basse, écartée de l'axe de rotation du porte-satellite, une zone dite haute, rapprochée de l'axe de rotation du porte-satellite, au moins un canal principal débouchant au niveau de ladite interface et au niveau de la zone haute, et au moins un canal secondaire débouchant au niveau de ladite interface et au niveau de la zone basse.

En fonctionnement, sous l'effet de la force centrifuge, l'huile présente dans la chambre est repoussée radialement vers l'extérieur. La chambre ménagée dans le porte-satellite se remplit donc d'abord en zone basse, écartée de l'axe de rotation du porte-satellite, puis en zone haute.

En fonctionnement normal, c'est-à-dire en l'absence de panne dans le circuit d'amenée d'huile, le débit d'huile qui arrive dans la chambre est important et le niveau d'huile atteint par conséquent la zone haute de ladite chambre. L'huile peut alors s'échapper par le canal principal afin d'alimenter le palier lisse, c'est-à-dire l'interface entre les surfaces cylindriques du porte-satellite et du satellite.

Il est à noter que, compte tenu de ses dimensions, le canal secondaire ne permet pas de faire passer tout le débit d'huile, de sorte que la chambre se remplit en fonctionnement normal.

En cas de panne, le débit d'huile qui arrive dans la chambre devient nul et le volume d'huile dans la chambre diminue et n'atteint plus la zone haute : l'huile ne peut plus s'échapper par le canal principal, mais uniquement par le canal secondaire. Le débit d'huile alimentant le palier lisse est alors réduit, mais est suffisant pour éviter le grippage de ce palier pendant une période de temps limitée, nécessaire par exemple au démarrage d'une pompe auxiliaire ou à l'arrêt de la turbomachine (fonctionnement dégradé du palier lisse).

Selon une caractéristique de l'invention, la chambre est sensiblement cylindrique.

De préférence, la section du canal secondaire est inférieure à la section du canal principal.

Ces sections sont déterminées en fonction du débit d'huile nécessaire au fonctionnement normal du palier lisse et au fonctionnement dégradé de celui-ci.

Selon une forme de réalisation de l'invention, la chambre comporte au moins deux parties décalées axialement l'une par rapport à l'autre et reliées par au moins un orifice de communication débouchant au niveau de la zone basse de chaque partie de la chambre.

Dans ce cas, les deux parties de la chambre peuvent être séparées par une cloison comportant un orifice reliant les deux parties et débouchant au niveau de la zone haute de chaque partie, le canal principal débouchant dans ledit orifice.

Selon une autre caractéristique de l'invention, le canal secondaire débouche dans la chambre en un point écarté radialement du point le plus bas de la chambre.

Quand des particules sont relarguées dans la chambre , en fonctionnement, elles sont centrifugées au point le plus bas de la chambre, c'est-à-dire au point le plus éloigné de l'axe de rotation du porte-satellite. Comme le débouché du canal secondaire est décalé du point le plus bas, on évite que les particules soient amenées jusqu'au palier lisse ou ne viennent boucher le canal secondaire.

Selon une forme de réalisation de l'invention, le canal secondaire débouche dans la chambre, au niveau d'une zone en saillie par rapport à la paroi interne de la chambre.

Avantageusement, le réducteur comporte au moins deux canaux secondaires, débouchant de part et d'autre d'un plan radial passant par l'axe de rotation du porte-satellite, en des points écartés radialement du point le plus bas de la chambre.

De préférence, chaque canal secondaire débouche dans une partie de la chambre.

De cette manière, à l'arrêt et quelle que soit la position du porte-satellite, les deux parties de la chambre ne peuvent pas être simultanément vidées par gravité. Ainsi, en cas de redémarrage, un volume d'huile (même faible) est disponible pour alimenter le palier lisse.

En outre, la chambre peut comporter une rainure ménagée dans la zone basse de la chambre, ladite rainure comportant au moins une zone haute et au moins une zone basse écartées axialement l'une de l'autre, la zone basse de la rainure étant plus éloignée radialement de l'axe de rotation du porte-satellite que la zone haute de la rainure, ladite zone basse de la rainure étant éloignée axialement du débouché du canal secondaire dans la chambre.

La rainure forme ainsi un piège à particules permettant, en fonctionnement, de piéger et d'éloigner les particules du débouché du canal secondaire. En effet, en fonctionnement, les particules sont tout d'abord piégées dans la rainure par centrifugation, puis sont amenées progressivement (toujours par centrifugation) vers la zone la plus basse de la rainure, c'est-à-dire en un point suffisamment éloigné du débouché du canal secondaire. Ainsi, même en cas d'arrêt puis de redémarrage, les particules sont à nouveau piégées par la rainure avant d'avoir pu atteindre le canal secondaire et on évite tout risque de bouchage du canal secondaire.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique de face d'un train épicycloïdal,
- la figure 2 est un schéma cinématique d'un train épicycloïdal,
- la figure 3 est une vue en coupe transversale d'une partie d'un porte-satellites et d'un satellite d'un réducteur selon l'invention,
- les figures 4 et 5 sont des vues en coupe longitudinale d'une partie du porte-satellite, respectivement selon les lignes A et B de la figure 3,
- les figures 6 et 7 sont des vues correspondant sensiblement à la figure 3, illustrant deux autres formes de réalisation de l'invention,
- les figures 8 et 9 sont des vues illustrant schématiquement la position des canaux secondaires et le volume résiduel d'huile dans la chambre, dans deux positions différentes d'arrêt du porte-satellites,
- la figure 10 est une vue en perspective d'une partie de la chambre comportant une zone en saillie au niveau de laquelle débouche un canal secondaire,
- la figure 11 est une vue en coupe longitudinale et en perspective d'une partie de la chambre comportant une rainure servant à piéger des particules.

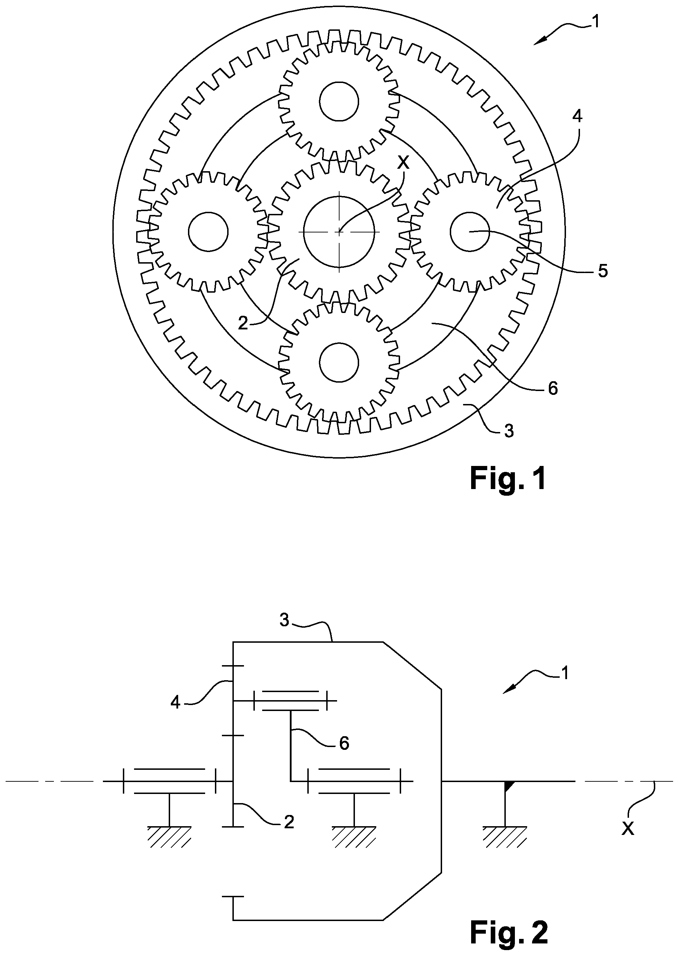

Les figures 1 et 2 illustrent schématiquement la structure d'un réducteur à train épicycloïdal 1 selon l'invention. Celui-ci comporte classiquement un planétaire interne 2 (également appelé soleil) et un planétaire externe 3 (également appelé couronne) coaxiaux. Le planétaire interne 2 est mobile en rotation autour de son axe X, le planétaire externe 3 étant fixe. Le réducteur 1 comporte en outre des satellites 4 montés de façon mobile en rotation sur des pivots 5 d'un porte-satellites 6. Chaque satellite 5 engrène à la fois avec le planétaire interne 2 et avec le planétaire externe 3. Le porte-satellites 6 est pivotant autour de l'axe X du planétaire interne 2 et du planétaire externe 3.

L'entrée est formée par le planétaire interne 2 et la sortie est formée par le porte-satellites 6.

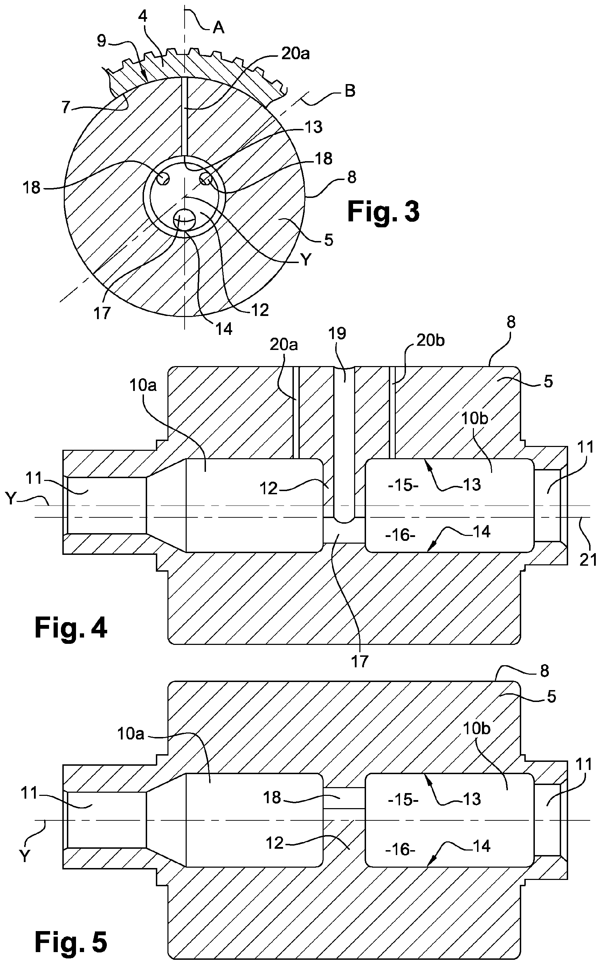

Dans une turbomachine, des trains épicycloïdaux 1 sont notamment utilisés en tant que réducteur de vitesse pour réduire la vitesse de rotation du rotor de la soufflante, indépendamment de la vitesse de rotation de la turbine. Comme cela est mieux visible aux figures 3 à 5, chaque satellite 4 comporte une surface interne cylindrique 7 montée pivotante autour d'une surface cylindrique 8 du pivot 5 correspondant du porte-satellites 6, de façon à former un palier lisse.

Il est donc nécessaire d'alimenter en huile l'interface 9 entre ces deux surfaces cylindriques 7, 8. Pour cela, le réducteur 1 comporte des moyens d'amenée comportant une chambre 10 s'étendant sensiblement selon l'axe Y de chaque pivot 5, l'une au moins des extrémités 11 de la chambre 10 étant raccordée à un canal d'entrée d'huile. Si une seule des extrémités 11 forme une arrivée d'huile, l'autre extrémité est bouchée.

La chambre 10 est globalement cylindrique et comporte plus particulièrement deux parties 10a, 10b séparées par une cloison médiane 12 s'étendant radialement. Les extrémités latérales 11 de la chambre 10 comportent des trous de plus faible diamètre que la chambre 10, dont l'un au moins forme une entrée d'huile, comme indiqué précédemment.

La ligne référencée 13 forme le point dit le plus bas de la chambre 10, c'est-à-dire le point le plus écarté de l'axe de rotation X du porte-satellites 6. A l'inverse, la ligne référencée 14 forme le point le plus haut de la chambre 10, c'est-à-dire le point le plus rapproché de l'axe de rotation X du porte-satellites 6. De même, les zones dites basse et haute sont référencées respectivement 15 et 16. L'axe X est situé dans le plan de coupe A de la figure 3 mais n'est pas visible sur les figures 3 à 5.

En fonctionnement, sous l'effet de la force centrifuge générée par la rotation du porte-satellites 6, l'huile est repoussée dans la chambre 10 radialement vers l'extérieur. La chambre 10 se remplit donc d'abord en zone basse 15, puis en zone haute 16.

La paroi médiane 12 est traversée par un orifice 17 débouchant dans les zones hautes 16 des parties 10a, 10b de la chambre 10. La paroi médiane 12 est en outre traversée par deux orifices 18 débouchant dans les zones basses 15 des parties 10a, 10b de la chambre 10. Les orifices 18 sont situés de part et d'autre du plan A de la figure 3, c'est-à-dire de part et d'autre du plan radial passant par l'axe X de rotation du porte-satellites 6 et par l'axe Y de la chambre 10 et du pivot 5 correspondants. Le diamètre de chaque orifice 18 peut être inférieur au diamètre de l'orifice 17.

Un canal principal 19 s'étend radialement dans la cloison médiane 12 et débouche au niveau de la paroi cylindrique externe 8 du pivot 5 et dans l'orifice 17.

Dans la forme de réalisation des figures 3 à 5, chaque partie 10a, 10b de la chambre 10 comporte en outre un canal secondaire 20a, 20b s'étendant radialement, débouchant au niveau de la paroi cylindrique externe 8 du pivot 5 et débouchant au point le plus bas 13 de la partie correspondante 10a, 10b de la chambre 10.

La section de chaque canal secondaire 20a, 20b est inférieure à la section du canal principal 19. A titre d'exemple, le diamètre du canal principal 19 est de l'ordre de 5 mm et le diamètre de chaque canal secondaire 20a, 20b est de l'ordre de 0,5 mm.

En fonctionnement normal, de l'huile pénètre dans la chambre 10 avec un débit suffisant pour que le niveau d'huile soit situé dans la zone haute 16 de la chambre 10. Le volume d'huile est égal dans les deux parties 10a, 10b de la chambre 10, du fait de la communication entre ces parties, à la fois par les orifices 18 et par l'orifice 17.

L'huile pénètre alors dans le conduit principal 19 et est amenée par centrifugation jusqu'au niveau de l'interface 9.

La section du canal principal 19 est dimensionnée de façon à obtenir à l'interface 9 un film d'huile dont l'épaisseur correspond aux spécifications imposées ou calculées pour obtenir un bon fonctionnement du palier lisse et éviter en particulier tout phénomène de grippage.

En cas de panne de lubrification, le volume d'huile diminue rapidement, jusqu'à atteindre le niveau référencé 21 à la figure 3, à partir duquel l'huile ne peut plus pénétrer dans le canal principal 19, à travers l'orifice 17. A partir de cet instant, l'huile ne peut s'échapper (sous l'effet de la centrifugation) que par les canaux secondaires 20a, 20b. Dans cette phase de fonctionnement dégradé, un débit d'huile suffisant atteint l'interface 9 par l'intermédiaire des canaux secondaires 20a, 20b, de façon à éviter le grippage du palier lisse pendant une période donnée, par exemple de l'ordre de 30 secondes. Cette période doit être suffisante pour permettre par exemple le redémarrage d'une pompe auxiliaire ou l'arrêt de la turbomachine. Les sections des canaux secondaires 20a, 20b sont donc déterminées de façon à pouvoir autoriser un tel mode dégradé pendant la période voulue.

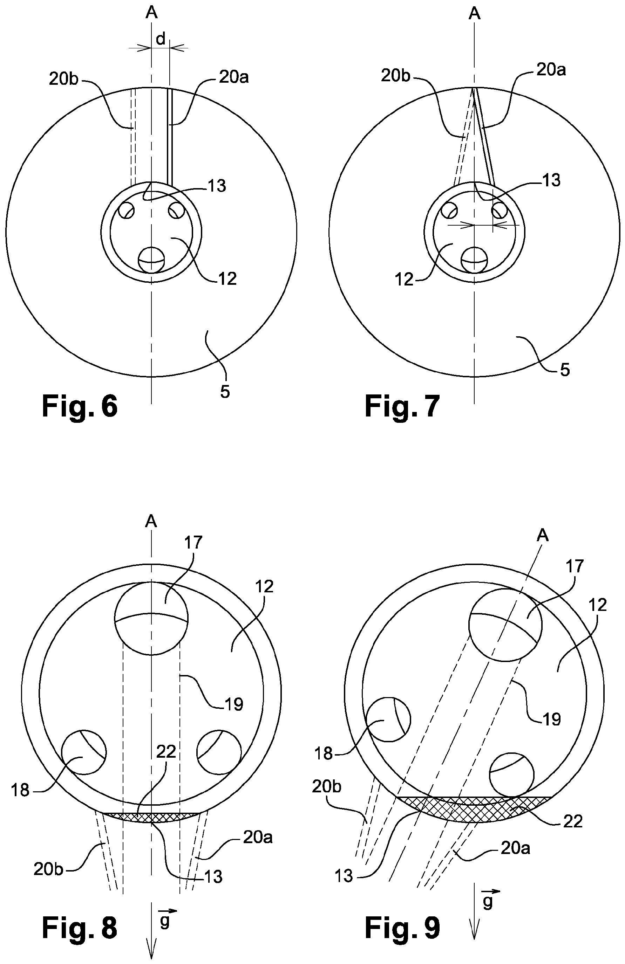

La figure 6 illustre un autre mode de réalisation, dans lequel chaque canal secondaire 20a, 20b s'étend parallèlement au plan A précité, et est écarté de ce plan d'une distance d. De cette manière, chaque canal secondaire 20a, 20b débouche dans la partie correspondante 10a, 10b de la chambre 10, en un point décalé radialement vers l'intérieur par rapport au point le plus bas 13. En outre, les canaux secondaires 20a, 20b sont disposés de part et d'autre du plan A.

Dans une variante représentée à la figure 7, les canaux secondaires 20a, 20b peuvent être orientés obliquement par rapport au plan A de sorte que chaque canal secondaire 20a, 20b débouche dans la chambre 10 en un point décalé radialement vers l'intérieur par rapport au point le plus bas 13 et débouche également sur la surface cylindrique 8, le long du plan A. Dans ce cas également, les canaux secondaires 20a, 20b sont disposés de part et d'autre du plan A.

Les formes de réalisation des figures 6 et 7 permettent d'éviter que des particules ne viennent boucher les canaux secondaires 20a, 20b ou qu'elles soient amenées vers le palier lisse. En effet, quand des particules sont relarguées dans la chambre 10, en fonctionnement, elles sont centrifugées au point le plus bas 13 de la chambre 10, c'est-à-dire au point le plus éloigné de l'axe de rotation X du porte-satellites 6. Comme les débouchés des canaux secondaires 20a, 20b sont décalés du point le plus bas 13, on évite que les particules pénètrent dans les canaux secondaires 20a, 20b ou viennent les boucher.

Les figures 8 et 9 illustrent schématiquement une chambre 10 selon la forme de réalisation de la figure 6, dans deux positions différentes d'arrêt du porte-satellites 6.

Dans le cas représenté à la figure 8, le plan A est orienté selon le champ gravitationnel, représenté par le vecteur g. Sous l'effet de la gravitation, l'huile 22 encore contenue dans la chambre retombe dans la zone basse. Dans ce cas, l'huile peut s'échapper par les canaux secondaires 20a, 20b, un volume d'huile 22 restant dans chaque chambre 10, du fait du décalage entre les débouchés des canaux secondaires 20a, 20b et le point le plus bas 13

Ainsi, lors d'une phase ultérieure de redémarrage, ce volume d'huile 22 peut pénétrer dans les canaux secondaires 20a, 20b et lubrifier le palier lisse avant l'amenée d'huile à l'intérieur de la chambre 10.

Dans un autre cas, représenté à la figure 9, le plan A est oblique par rapport à la direction du champ gravitationnel g. En particulier, l'huile 22 retombe dans une zone dont le fond comporte le débouché de l'un des canaux secondaires, à savoir le canal 20a. Dans un tel cas, l'une 10a des parties de la chambre 10 est vidée de son huile, qui s'échappe par ce canal secondaire 20a, alors que l'autre partie 10b de la chambre 10 contient un volume d'huile 22. De même que précédemment, en cas de redémarrage, ce volume d'huile 22 peut circuler d'une partie à l'autre, par l'intermédiaire des orifices 18, pénétrer dans les canaux secondaires 20a, 20b et lubrifier le palier lisse avant l'amenée d'huile à l'intérieur de la chambre 10. On notera que le volume d'huile 22 présent dans la chambre 10 dans le cas de la figure 9 est plus important que dans le cas de la figure 8.

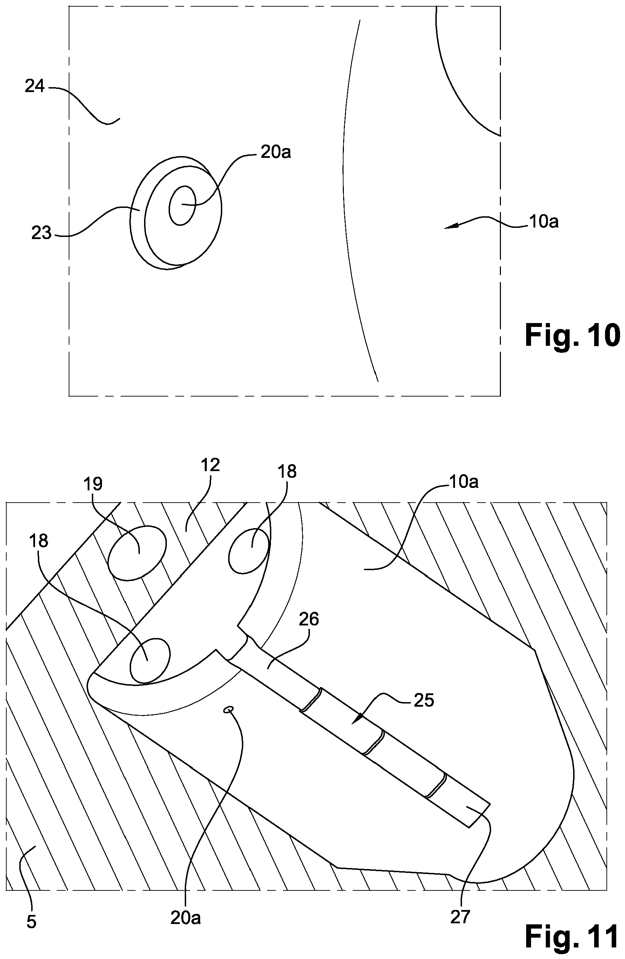

La figure 10 illustre encore une autre forme de réalisation dans laquelle chaque canal secondaire 20a, 20b débouche dans la chambre 10, au niveau d'une zone 23 en saillie par rapport à la paroi interne 24 de la chambre, de façon à éviter comme précédemment que des particules ne pénètrent ou ne viennent boucher les canaux secondaires 20a, 20b.

Un autre type de piège à particules est illustré à la figure 11. Dans cette forme de réalisation, chaque partie 10a, 10b de la chambre 10 comporte une rainure 25 ménagée dans la zone basse 15 de la chambre 10, ladite rainure 25 comportant au moins une zone haute 26 et au moins une zone basse 27 écartées axialement l'une de l'autre, la zone basse 27 de la rainure 25 étant plus éloignée radialement de l'axe de rotation X du porte-satellites 6 que la zone haute 26 de la rainure 25, ladite zone basse 27 de la rainure 25 étant éloignée axialement du débouché du canal secondaire 20a correspondant dans la chambre 10. La rainure 25 comporte en particulier des étages successifs permettant de passer de sa zone haute 26 à sa zone basse 27.

La rainure 25 forme ainsi un piège à particules permettant, en fonctionnement, de piéger et d'éloigner les particules du débouché du canal secondaire 20a, 20b correspondant. En effet, en fonctionnement, les particules sont tout d'abord piégées dans la rainure 25 par centrifugation, puis sont amenées progressivement (toujours par centrifugation) vers la zone la plus basse 27 de la rainure 25, c'est-à-dire en un point suffisamment éloigné du débouché du canal secondaire 20a, 20b. Ainsi, même en cas d'arrêt puis de redémarrage, les particules sont à nouveau piégées par la rainure 25 avant d'avoir pu atteindre le canal secondaire 20a, 20b. On évite ainsi tout risque de bouchage du canal secondaire 20a, 20b.

L'invention propose ainsi un réducteur à train épicycloïdal, comportant des paliers lisses équipés de moyens d'amenée d'huile fiables et peu encombrants, capables de fournir en cas de panne du circuit d'huile un débit d'huile suffisant pendant une période déterminée.

## Revendications

1. Réducteur à train épicycloïdal (1), notamment pour turbomachine, comportant un planétaire interne (2) et un planétaire externe (3) coaxiaux, au moins un satellite (4) monté de façon mobile en rotation sur un porte-satellite (6) et engrenant à la fois avec le planétaire interne (2) et avec le planétaire externe (3), le porte-satellite (6) étant pivotant autour de l'axe (X) du planétaire interne (2) et du planétaire externe (3), le satellite (4) comportant une surface interne (7) cylindrique montée pivotante autour d'une surface (8) cylindrique du porte-satellite (6), le réducteur (1) comportant en outre des moyens d'amenée d'huile au niveau de l'interface (9) entre lesdites surfaces cylindriques (7, 8), les moyens d'amenée d'huile comportant une chambre (10) ménagée dans le porte-satellite (6), destinée à former un volume tampon d'huile, et comportant une zone dite basse (15), écartée de l'axe de rotation (X) du porte-satellite (6), une zone dite haute (16), rapprochée de l'axe (X) de rotation du porte-satellite (6), et au moins un canal secondaire (20a, 20b) débouchant au niveau de ladite interface (9) et au niveau de la zone basse (15),
**caractérisé en ce que**
le planétaire interne (2) est mobile en rotation autour de son axe (X) et le planétaire externe (3) est fixe,
et **en ce que** les moyens d'amenée d'huile comportent au moins un canal principal (19) débouchant au niveau de ladite interface (9) et au niveau de la zone haute (16).

2. Réducteur (1) selon la revendication 1, **caractérisé en ce que** la chambre (10) est sensiblement cylindrique.

3. Réducteur (1) selon la revendication 1 ou 2, **caractérisé en ce que** la section du canal secondaire (20a, 20b) est inférieure à la section du canal principal (19).

4. Réducteur (1) selon l'une des revendications 1 à 3, **caractérisé en ce que** la chambre (10) comporte au moins deux parties (10a, 10b) décalées axialement l'une par rapport à l'autre et reliées par au moins un orifice (18) de communication débouchant au niveau de la zone basse (15) de chaque partie (10a, 10b) de la chambre (10).

5. Réducteur (1) selon la revendication 4, **caractérisé en ce que** les deux parties (10a, 10b) de la chambre (10) sont séparées par une cloison (12) comportant un orifice (17) reliant les deux parties (10a, 10b) et débouchant au niveau de la zone haute (16) de chaque partie (10a, 10b), le canal principal (19) débouchant dans ledit orifice (17).

6. Réducteur (1) selon l'une des revendications 1 à 5, **caractérisé en ce que** le canal secondaire (20a, 20b) débouche dans la chambre (10) en un point écarté radialement du point le plus bas (13) de la chambre (10).

7. Réducteur (1) selon la revendication 6, **caractérisé en ce que** le canal secondaire (20a, 20b) débouche dans la chambre (10), au niveau d'une zone en saillie (23) par rapport à la paroi interne (24) de la chambre (10).

8. Réducteur (1) selon l'une des revendications 1 à 7, **caractérisé en ce qu'**il comporte au moins deux canaux secondaires (20a, 20b), débouchant de part et d'autre d'un plan radial (A) passant par l'axe (X) de rotation du porte-satellite (6), en des points écartés radialement du point le plus bas (13) de la chambre (10).

9. Réducteur (1) selon l'ensemble des revendications 5 et 8, **caractérisé en ce que** chaque canal secondaire (20a, 20b) débouche dans une partie (10a, 10b) de la chambre (10).

10. Réducteur (1) selon l'une des revendications 1 à 9, **caractérisé en ce que** la chambre (10) comporte une rainure (25) ménagée dans la zone basse (15) de la chambre (10), ladite rainure (25) comportant au moins une zone haute (26) et au moins une zone basse (27) écartées axialement l'une de l'autre, la zone basse (27) de la rainure (25) étant plus éloignée radialement de l'axe de rotation (X) du porte-satellite (6) que la zone haute (26) de la rainure (25), ladite zone basse (27) de la rainure (25) étant éloignée axialement du débouché du canal secondaire (20a, 20b) dans la chambre (10).

## Patentansprüche

1. Drehzahlreduzierendes Getriebe (1), insbesondere für eine Turbomaschine, umfassend ein koaxiales internes Planetengetriebe (2) und ein koaxiales externes Planetengetriebe (3), wenigstens einen Satelliten (4), der mobil in Rotation auf einem Satellitenträger (6) montiert ist und gleichzeitig in das interne Planetengetriebe (2) und in das externe Planetengetriebe (3) eingreift, wobei der Satellitenträger (6) schwenkbar um die Achse (X) des internen Planetengetriebes (2) und des externen Planetengetriebes (3) ist, wobei der Satellit (4) eine zylindrische interne Fläche (7) umfasst, die schwenkbar um eine zylindrische Fläche (8) des Satellitenträgers (6) montiert ist, wobei das Getriebe (1) darüber hinaus Ölzuführmittel an der Schnittstelle (9) zwischen den genannten zylindrischen Flächen (7, 8) umfasst, wobei die Ölzuführmittel die eine in dem Satellitenträger (6) ausgesparte Kammer (10) umfassen, die zum Bilden eines Ölpuffervolumens bestimmt ist, und einen so genannten niedrigen Bereich (15), der von der Rotationsachse (X) des Satellitenträgers (6) beabstandet ist einen so genannten hohen Bereich (16), der der Rotationsachse (X) des Satellitenträgers (6) angenähert ist, und wenigstens einen sekundären Kanal (20a, 20b), der an der genannten Schnittstelle (9) und an dem niedrigen Bereich (15) mündet, umfasst,
**dadurch gekennzeichnet, dass**
das interne Planetengetriebe (2) in Rotation mobil um seine Achse (X) ist und das externe Planetengetriebe (3) fest ist,
und dass die Ölzuführmmittel wenigstens einen Hauptkanal (19) umfassen, der an der genannten Schnittstelle (9) und an dem hohen Bereich (16) mündet.

2. Getriebe (1) gemäß Anspruch 1, **dadurch gekennzeichnet, dass** die Kammer (10) deutlich zylindrisch ist.

3. Getriebe (1) gemäß Anspruch 1 oder 2, **dadurch gekennzeichnet, dass** der Querschnitt des sekundären Kanals (20a, 20b) kleiner ist als der Querschnitt des Hauptkanals (19).

4. Getriebe (1) gemäß einem der Ansprüche 1 bis 3, **dadurch gekennzeichnet, dass** die Kammer (10) wenigstens zwei Teile (10a, 10b) umfasst, die axial im Verhältnis zueinander verschoben und durch wenigstens eine Verbindungsöffnung (18) verbunden sind, die an dem niedrigen Teil (15) jedes Teils (10b, 10b) der Kammer (10) einmündet.

5. Getriebe (1) gemäß Anspruch 4, **dadurch gekennzeichnet, dass** die zwei Teile (10a, 10b) der Kammer (10) durch eine Trennwand (12) getrennt sind, die eine Öffnung (17) umfasst, welche die zwei Teile (10a, 10b) miteinander verbindet und an dem hohen Bereich (16) jedes Teils (10a, 10b) einmündet, wobei der Hauptkanal (19) in die genannte Öffnung (17) einmündet.

6. Getriebe (1) gemäß einem der Ansprüche 1 bis 5, **dadurch gekennzeichnet, dass** der sekundäre Kanal (20a, 20b) in einem radial vom niedrigsten Punkt (13) der Kammer (10) beabstandeten Punkt in die Kammer (10) einmündet.

7. Getriebe (1) gemäß Anspruch 6, **dadurch gekennzeichnet, dass** der sekundäre Kanal (20a, 20b) an einem im Verhältnis zur Innenwand (24) der Kammer (10) hervorstehenden Bereich (23) in die Kammer (10) einmündet.

8. Getriebe (1) gemäß einem der Ansprüche 1 bis 7, **dadurch gekennzeichnet, dass** es wenigstens zwei sekundäre Kanäle (20a, 20b) umfasst, die auf jeder Seite einer radialen Ebene (A) einmünden, die an radial von dem niedrigsten Punkt (13) der Kammer (10) beabstandeten Punkten durch die Rotationsachse (X) des Satellitenträgers (6) hindurchtritt.

9. Getriebe (1) gemäß allen Ansprüchen 5 und 8, **dadurch gekennzeichnet, dass** jeder sekundäre Kanal (20a, 20b) in einen Teil (10a, 10b) der Kammer (10) mündet.

10. Getriebe (1) gemäß einem der Ansprüche 1 bis, **dadurch gekennzeichnet, dass** die Kammer (10) eine Nut (25) umfasst, die in dem niedrigen Bereich (15) der Kammer (10) ausgespart ist, wobei die genannte Nut (25) wenigstens einen hohen Bereich (26) und wenigstens einen niedrigen Bereich (27) umfasst, die axial voneinander beabstandet sind, wobei der niedrige Bereich (27) der Nut (25) radial weiter von der Rotationsachse (X) des Satellitenträgers (6) entfernt ist als der hohe Bereich (26) der Nut (25), wobei der genannte niedrige Bereich (27) der Nut (25) axial von der Mündung des sekundären Kanals (20a, 20b) in der Kammer (10) entfernt ist.

## Claims

1. A speed-reducing unit (1) having an epicyclic gear train, in particular for a turbine engine, comprising an inner planetary gear (2) and an outer planetary gear (3) which are coaxial, at least one planetary wheel (4) rotatably mounted on a planetary wheel carrier (6) and engaging with both the inner planetary gear (2) and the outer planetary gear (3), the planetary wheel carrier (6) pivoting about the axis (X) of the inner planetary gear (2) and of the outer planetary gear (3), the planetary wheel (4) comprising an inner cylindrical surface pivotably mounted about a cylindrical surface of the planetary wheel carrier (6), with the speed-reducing unit (1) further comprising an improved means for supplying oil at the interface between said cylindrical surfaces (7, 8), with the means for supplying oil comprising a chamber (10) provided in the planetary wheel carrier (6), intended to form an oil buffer volume, and comprising a so-called lower zone (15) spaced from the axis of rotation (X) of the planetary wheel carrier (6), a so-called upper zone (16), close to the axis (X) of rotation of the planetary wheel carrier (6), and at least one secondary channel (20a, 20b) opening into said interface (9) and at the lower zone (15),
**characterized in that**
the inner planetary gear (2) is rotatably mounted about its axis (X) and the outer planetary gear (3) is stationary,
and **in that** the means for supplying oil comprise at least one main channel (19) opening at said interface (9) and at the upper zone (16).

2. A speed-reducing unit (1) according to claim 1, **characterized in that** the chamber (10) is substantially cylindrical.

3. A speed-reducing unit (1) according to claim 1 or 2, **characterized in that** the section of the secondary channel (20a, 20b) is smaller than the section of the main channel (19).

4. A speed-reducing unit (1) according to one of claims 1 to 3, **characterized in that** the chamber (10) comprises at least two parts (10a, 10b) axially offset with respect to one another and connected by at least one communication hole (18) opening at the lower zone (15) of each part (10a, 10b) of the chamber (10).

5. A speed-reducing unit (1) according to claim 4, **characterized in that** the two parts (10a, 10b) of the chamber (10) are separated by a partition (12) having a hole (17) connecting the two parts (10a, 10b) and opening at the upper zone (16) of each part (10a, 10b), with the main channel (19) opening into said hole (17).

6. A speed-reducing unit (1) according to one of claims 1 to 5, **characterized in that** the secondary channel (20a, 20b) opens into the chamber (10) at a point radially spaced from the lowest point (13) of the chamber (10).

7. A speed-reducing unit (1) according to claim 6, **characterized in that** the secondary channel (20a, 20b) opens into the chamber (10) at a zone (23) projecting from the inner wall (24) of the chamber (10).

8. A speed-reducing unit (1) according to one of claims 1 to 7, **characterized in that** it comprises at least two secondary channels (20a, 20b) opening on either side of a radial plane (A) passing through the axis (X) of rotation of the planetary wheel carrier (6), at points radially spaced from the lowest point (13) of the chamber (10).

9. A speed-reducing unit (1) according to all of claims 5 and 8, **characterized in that** each secondary channel (20a, 20b) opens into a part (10a, 10b) of the chamber (10).

10. A speed-reducing unit (1) according to one of claims 1 to 9, **characterized in that** the chamber (10) has a groove (25) provided in the lower zone (15) of the chamber (10), with said groove (25) comprising at least one upper zone (26) and at least one lower zone (27) axially spaced apart from each other, with the lower zone (27) of the groove (25) being radially further from the axis of rotation (X) of the planetary wheel carrier (6) than the upper zone (26) of the groove (25), with said lower zone (27) of the groove (25) being axially spaced away from the outlet of the secondary channel (20a, 20b) in the chamber (10).
